# FASCICULE DE BREVET EUROPEEN

(11) **EP 0 678 803 B1**
(45) Date de publication et mention de la délivrance du brevet: **05.07.2000**
(21) Numéro de dépôt: 95400818.1
(22) Date de dépôt: 11.04.1995
(51) Int. Cl.: G06F 1/00

(54) **Procédé destiné à vérifier à distance la conformité d'un logiciel**
Verfahren zum Fernprüfen der Übereinstimmung von Software
Method for remote verifying the conformity of software

(30) Priorité: 13.04.1994 FR 9404376
(43) Date de publication de la demande: 25.10.1995
(73) Titulaire: FRANCE TELECOM, 75015 Paris (FR)
(72) Inventeur: Arditti, David, F-92140 Clamart (FR); Campana, Mireille, F-92140 Clamart (FR); Scheiwe, Alain, F-28500 Vernouillet (FR)
(74) Mandataire: Dubois-Chabert, Guy

(56) Documents cités:
- WO-A-90/13865
- WO-A-93/23807

## Description

### Domaine technique

La présente invention concerne un procédé destiné à vérifier à distance la conformité d'un logiciel implanté dans une mémoire d'un équipement distant, placé dans un environnement public, à une version de base de ce même logiciel implantée dans une mémoire d'un équipement central.

### Etat de la technique antérieure

Dans le domaine des services pouvant être rendus dans un environnement public, certains équipements distants, comme des publiphones ou des distributeurs de banque, utilisent des logiciels, implantés dans des mémoires, leur permettant de faire évoluer les services qu'ils rendent en fonction des besoins nouveaux des utilisateurs. Ceci conduit à la mise en place périodique de nouvelles versions logicielles destinées à répondre à ces évolutions.

Ces logiciels, une fois présents dans les mémoires mortes de ces équipements extérieurs, sont soumis à une menace: les mémoires peuvent être volées puis remises en place avec des logiciels altérés.

Il convient donc d'être capable de pouvoir vérifier à distance la conformité de ces versions logicielles à des versions de référence stockées dans un serveur centralisé relié aux équipements distants.

Les documents de l'art connu décrivent des procédés permettant de vérifier à distance que les logiciels implantés dans ces équipements distants sont toujours présents, et donc de vérifier l'absence d'un accident tel qu'un effacement ou une altération de ces logiciels. L'équipement distant renvoie une information qui est le résultat d'un calcul et qui, lorsque le logiciel ne change pas, reste toujours la même.

Ainsi, au cours de la vie de ces logiciels, un serveur centralisé, lors de cycles de scrutation réguliers, va contrôler systématiquement la conformité de chacun des logiciels présents dans chacun de ces équipements distants.

A l'heure actuelle, ce type de vérification existe partiellement pour le publiphone mais il ne porte que sur le code produit (type de publiphone) et le statut (logiciel présent, absent ou erroné).

L'inconvénient principal d'un tel système de contrôle par émission vers le serveur d'un champ fixe comme le code produit et le statut du publiphone est, qu'à chaque cycle de scrutation, les informations émises par le publiphone sont toujours identiques et donc une simple écoute de la ligne de transmission entre le publiphone et le serveur permet d'obtenir ces informations, laissant ainsi la possibilité à un fraudeur d'implanter un logiciel différent de celui téléchargé par le serveur et d'émettre ensuite des informations de contrôle valides lors des demandes de contrôle envoyées par le serveur.

De manière à permettre une protection contre toute activité frauduleuse, l'invention a pour objet un procédé de vérification à distance d'au moins un logiciel, procédé qui est tel que les informations envoyées par un équipement distant vers un équipement central, ou "serveur", soient différentes à chaque contrôle, et ce pour une même version de logiciel.

### Exposé de l'invention

La présente invention concerne un procédé de vérification à distance de la conformité d'au moins un logiciel implanté dans une mémoire d'au moins un équipement distant, placé dans un environnement public, à une version de base de ce logiciel implantée dans la mémoire d'un équipement central, pouvant communiquer avec chaque équipement distant au travers d'un réseau de communication, caractérisé en ce qu'il comprend les étapes suivantes:
- une étape d'émission d'un nombre aléatoire par l'équipement central vers cet équipement distant, dans lequel ce nombre est juxtaposé au logiciel pour obtenir un premier fichier, dans lequel une fonction est appliquée à ce premier fichier pour obtenir une premier résultat et dans lequel ce premier résultat est transmis à l'équipement central ;
- une étape de réception de ce premier résultat par l'équipement central ;
- une étape de juxtaposition du nombre aléatoire et du logiciel de référence, d'obtention d'un second fichier, d'application de la fonction à ce second fichier et d'obtention d'un second résultat ;
- une étape de vérification de la conformité du logiciel au logiciel de référence par l'équipement central, en effectuant la comparaison des deux résultats.

Du fait de la non-reproductibilité du résultat envoyé de l'équipement distant vers l'équipement central, d'une fois sur l'autre, le procédé selon l'invention permet d'obtenir une protection contre toute activité frauduleuse.

Avantageusement le nombre aléatoire est placé en début du premier fichier, et en début du second fichier.

Avantageusement les différentes étapes de ces procédés sont réalisées périodiquement lors de cycles de scrutation réguliers.

Dans une réalisation avantageuse le réseau de communication est le réseau téléphonique.

### Brève description des dessins

- La figure 1 illustre un système d'équipements distants reliés à un équipement central par un réseau de communication ;

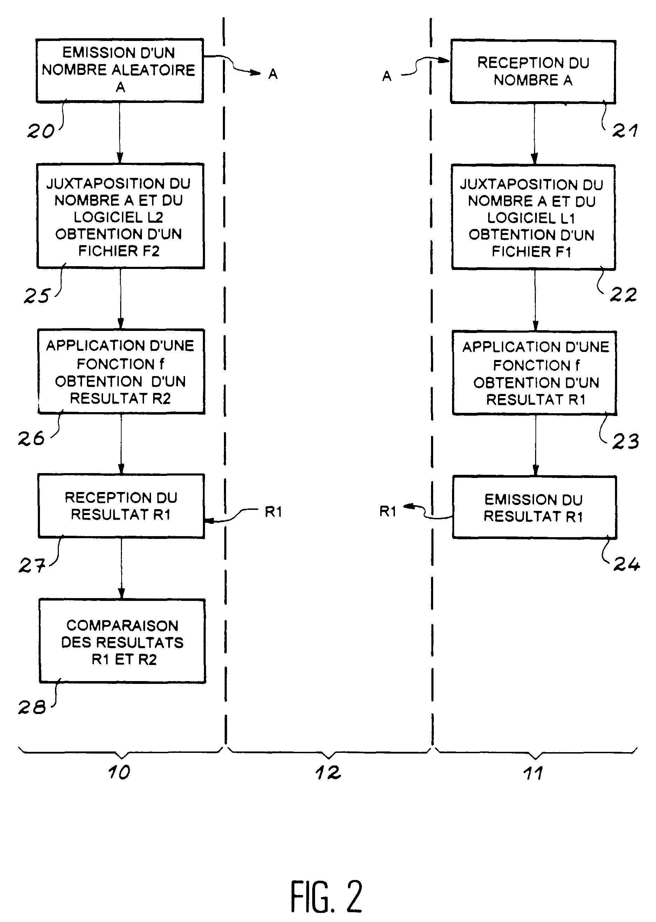

- la figure 2 illustre le procédé selon l'invention.

### Exposé détaillé de modes de réalisation

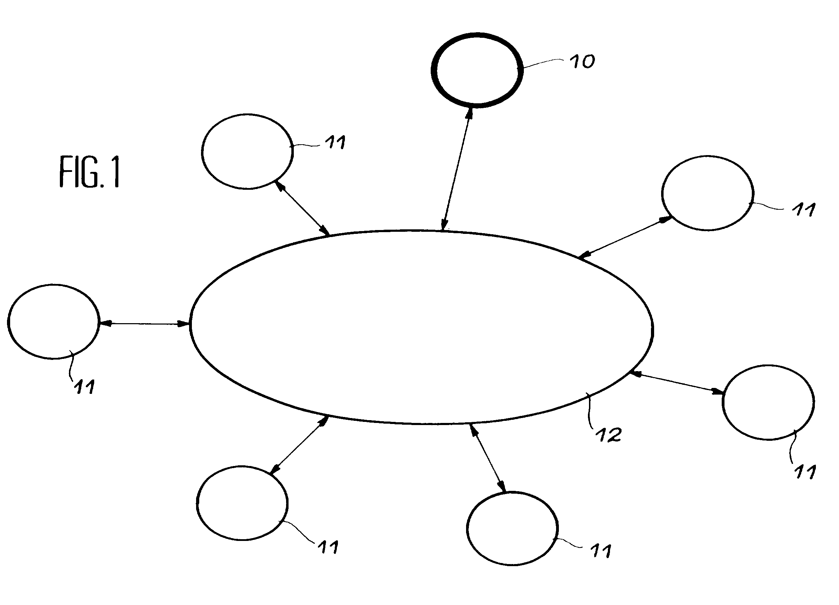

Sur la figure 1 sont représentés deux ensembles: un équipement central 10, ou serveur, et des équipements distants 11. Le serveur 10 est relié à ces équipements distants 11 par l'intermédiaire d'un réseau de communication 12, par exemple le réseau téléphonique.

Le premier ensemble, à savoir le serveur, détient des moyens M1 de calcul de nombre A non reproductible et des moyens M2 de calcul d'une fonction de condensation f qui est une fonction informatique associée à un fichier de champs d'éléments binaires de longueur déterminée. Il détient également une copie de référence du logiciel L1 que l'on souhaite contrôler, soit L2. En général, cet ensemble est une partie du logiciel du serveur.

Chaque équipement distant du deuxième ensemble renferme les mêmes moyens M2 ainsi qu'un logiciel L1 en mémoire dont il convient de vérifier la validité.

Dans le procédé selon l'invention:
- l'équipement central émet un nombre non reproductible A (étape 20);
- l'équipement distant reçoit ce nombre A (étape 21);
- l'équipement distant juxtapose le nombre A reçu et le logiciel L1 dont le premier ensemble souhaite vérifier la validité et obtient un fichier F1 (étape 22);
- l'équipement distant applique au fichier F1 une fonction de condensation f et trouve un résultat R1 (étape 23);
- l'équipement distant transmet le résultat R1 au premier ensemble (étape 24);
- l'équipement central juxtapose le nombre A et le logiciel L2 (copie de référence correspondant au logiciel L1) et obtient un fichier F2 (étape 25);
- l'équipement central applique au fichier F2 la fonction f et trouve un résultat R2 (étape 26);
- l'équipement central reçoit le résultat R1 (étape 27);
- l'équipement central compare R1 et R2 (étape 28); si ces résultats sont identiques, le logiciel L1 est déclaré conforme à la version de référence L2.

Le fichier F1 est une suite d'informations (suite de zéros et de uns présents dans une certaine zone de mémoire, dont on ne connaît pas a priori la taille.

La fonction de condensation f permet d'obtenir un résultat R qui est un champ de longueur courte, alors que le logiciel L peut avoir plusieurs centaines de kilo-octets. Cette fonction f est telle que la moindre modification dans le logiciel se traduise par une modification dans le résultat. Cette fonction de condensation f est une fonction qui à un message ou un fichier de longueur quelconque associe un champ R (ensemble de r bits) de longueur fixée restreinte (généralement 64 ou 128 bits) avec une dépendance forte de R vis-à-vis du message ou du fichier. Cette dépendance forte signifie qu'une modification, même infime, du message ou du fichier (par exemple en changeant un bit, ou en retirant un bit) entraîne une modification complète du résultat R. De plus, la fonction f est telle qu'il est impossible de trouver deux fichiers différents ayant le même condensé (impossible au sens de "informatiquement impossible").

En général les fonctions f procèdent de la façon suivante: on divise F en blocs M1 .... Mp de longueurs déterminées, par exemple 64 bits.

On utilise alors une fonction B qui, à deux blocs de 64 bits, associe un bloc de 64 bits. On condense d'abord M1 et M2 pour obtenir un condensé M' puis on condense M' et M3 pour obtenir un condensé M", puis on condense M" et M4.... et ainsi de suite jusqu'à Mp. Le dernier résultat est le condensé R.

Il est donc important de placer l'aléa A au début du fichier, car ainsi tous les résultats intermédiaires M', M" .... dépendent de A.

Ainsi dans le procédé selon l'invention à chaque contrôle par l'équipement central de la présence d'un logiciel autorisé dans la mémoire de l'équipement distant, l'équipement central émet un nombre aléatoire A vers l'équipement distant dont l'unité de traitement calcule le condensé du logiciel associé au nombre aléatoire fourni par l'équipement central et le transmet vers l'équipement central qui en vérifie la cohérence. Lors d'un premier envoi du nombre A, celui-ci a une valeur A1, on obtient un fichier F1 et un résultat R1. Lors d'un autre envoi du nombre A, celui-ci a une valeur A'1 ≠ A1 on obtient un fichier F'1 et un résultat R'1 ≠ R1.

Les seuls logiciels résidant dans la mémoire morte (PROM) de l'équipement distant sont les suivants:
- un logiciel du protocole d'échanges des informations entre l'équipement central et l'équipement distant (notamment le logiciel de téléchargement) ; et
- un logiciel de vérification de signature qui comprend le programme de calcul du condensé d'un fichier.

En mémoire vive (RAM) de l'équipement distant se trouve :
- le logiciel chargé (L1) dans l'équipement distant; et
- le nombre aléatoire (A) reçu lors de la phase de contrôle par l'équipement central.

Cette phase de contrôle est effectuée au cours des cycles de scrutation réguliers de l'équipement central qui contrôle ainsi la validité du logiciel présent dans l'équipement distant.

## Revendications

1. Procédé de vérification à distance de la conformité d'au moins au logiciel (L1) implanté dans une mémoire d'un équipement distant (11), placé dans un environnement public, à une version de base de ce logiciel (L2) implantée dans la mémoire d'un équipement central (10) pouvant communiquer avec chaque équipement local au travers d'un réseau (12) de communication, caractérisé en ce qu'il comprend les étapes suivantes:
- une étape d'émission d'un nombre aléatoire (A) par l'équipement central vers cet équipement local, dans lequel ce nombre (A) est juxtaposé au logiciel (L1) pour obtenir un premier fichier (F1), dans lequel une fonction (f) est appliquée à ce premier fichier (F1) pour obtenir un premier résultat (R1), et dans lequel ce premier résultat (R1) est transmis à l'équipement central ;
- une étape de réception de ce premier résultat (R1) par l'équipement central;
- une étape de juxtaposition du nombre aléatoire (A) et du logiciel de référence, d'obtention d'un second fichier (F2), d'application de la fonction (f) à ce second fichier (F2) et d'obtention d'un second résultat (R2) ;
- une étape de vérification de la conformité du logiciel (L1) au logiciel de référence (L2) par l'équipement central en effectuant la comparaison des deux résultats (R1, R2).

2. Procédé selon la revendication 1, caractérisé en ce que le nombre aléatoire (A) est placé en début du premier fichier (F1) et en début du second fichier (F2).

3. Procédé selon la revendication 1, caractérisé en ce que les différentes étapes de ce procédé sont réalisées périodiquement lors de cycles de scrutation réguliers.

4. Procédé selon la revendication 1, caractérisé en ce que le réseau de communication est le réseau téléphonique

## Claims

1. Method for the remote-checking the conformity of at least one software item installed in a memory of a remote equipment system (11) placed in a public environment with a basic version of this software (L2) installed in the memory of a central equipment system (10) able to communicate with each local equipment system via a communication network (12), characterized in that it comprises the following stages:
- a stage for emitting a random number (A) by the central equipment to this local equipment, wherein this number (A) is juxtaposed to the software (L1) so as to obtain a first file (F1), wherein a function (f) is applied to this first file (F1) so as to obtain a first result (R1) and wherein this first result (R1) is transmitted to the central equipment;
- a stage for receiving this first result (R1) by the central equipment;
- a stage for juxtaposing the random number (A) and reference software for obtaining a second file (F2), applying the function (f) to this second file (F2) and obtaining a second result (R2);
- a stage for checking the conformity of the software (L1) with the reference software (L2) by the central equipment by comparing the two results (R1, R2).

2. Method according to claim 1, characterized in that the random number (A) is placed at the start of the first file (F1) and at the start of the second file (F2).

3. Method according to claim 1, characterized in that the various stages of this method are carried out periodically during regular scanning cycles.

4. Method according to claim 1, characterized in that the communication network is the telephone network.

## Patentansprüche

1. Verfahren zum Femprüfen der Übereinstimmung wenigstens eines Programms bzw. einer Software (L1), installiert in einem Speicher einer Anlage, die sich an einem entfernten öffentlichen Ort befindet, mit einer Basisversion dieser Software (L2), installiert in dem Speicher einer zentralen Anlage (10), die mit jeder lokalen Anlage über ein Kommunikationsnetz kommunizieren (12) kann,
**dadurch gekennzeichnet,**
dass es die folgenden Schritte umfasst:
- einen Schritt zum Senden einer Zufallszahl (A) durch die zentrale Anlage an diese lokale Anlage, in dem diese Zahl (A) der Software (L1) gegenübergestellt bzw. zugeordnet wird, um eine erste Datei (F1) zu erhalten, in der eine Funktion (f) auf diese erste Datei (F1) angewendet wird, um ein erstes Resultat (R1) zu erzielen, und in dem dieses erste Resultat (R1) an die zentrale Anlage übertragen wird;
- einen Schritt zum Empfangen dieses ersten Resultats (R1) durch die zentrale Anlage;
- einen Schritt, um die Zufallszahl (A) der Bezugs-Software gegenüberzustellen, eine zweite Datei (F2) zu erstellen, die Funktion (f) auf diese zweite Datei (F2) anzuwenden und ein zweites Resultat (R2) zu erzielen;
- einen Schritt, um die Übereinstimmung der Software (L1) mit der Bezugs-Software (L2) durch die zentrale Anlage zu prüfen, indem der Vergleich der beiden Resultate (R1, R2) durchgeführt wird.

2. Verfahren nach Anspruch 1, dadurch gekennzeichnet, dass die Zufallszahl (A) an den Anfang der ersten Datei (F1) und den Anfang der zweiten Datei (F2) gestellt wird.

3. Verfahren nach Anspruch 1, dadurch gekennzeichnet, dass die verschiedenen Schritte dieses Verfahrens periodisch ausgeführt werden, während regelmäßiger Abfragezyklen.

4. Verfahren nach Anspruch 1, dadurch gekennzeichnet, dass das Kommunikationsnetz das Telefonnetz ist.
